# EUROPÄISCHE PATENTANMELDUNG

(11) **EP 4 379 249 A1**
(43) Veröffentlichungstag der Anmeldung: **05.06.2024**
(21) Anmeldenummer: 22210794.8
(22) Anmeldetag: 01.12.2022
(51) Int. Cl.: F16L 37/084, F16L 37/32

(54) **STECKKUPPLUNG**

(71) Anmelder: AVS, Ingenieur J.C. Römer GmbH, 94481 Grafenau (DE)
(72) Erfinder: HASELWARTER, Wolfgang, 94481 Grafenau (DE)
(74) Vertreter: Wolf, Gerhard

(57) **Zusammenfassung**

Die Erfindung betrifft eine Steckkupplung umfassend ein erstes und zweites Kupplungselement (2, 3), das eine Leckagedichtung (4) zur Verhinderung bzw. Verringerung der Leckage einer Flüssigkeit beim Entkoppeln der Steckverbindung (1) aufweist.

## Beschreibung

Die Erfindung betrifft eine Steckkupplung, die eine Dichteinrichtung zur Verhinderung einer Leckage beim Entkuppeln aufweist.

Steckkupplungen zum lösbaren Verbinden zweier Leitungsteile, insbesondere Schlauchteile, in denen eine Flüssigkeit geführt wird, sind grundsätzlich bekannt. Sie weisen zwei Kupplungselemente auf, die lösbar miteinander verbunden werden können, um einen Fluidfluss zwischen den beiden Leitungsteilen zu ermöglichen. In den Kupplungselementen ist jeweils zumindest ein Ventilstößel verschiebbar geführt, um beim Entkoppeln der Steckkupplung das Kupplungselement flüssigkeitsdicht zu verschließen.

Ein wesentlicher Nachteil bekannter Steckkupplungen besteht darin, dass diese beim Entkoppeln Leckageverluste haben. Die Leckage entsteht insbesondere dadurch, dass beim Verschieben der Ventilstößel von einer Offenstellung in die Position, in der die Ventilstößel auf dem Ventilsitz in Dichtlage anliegen, Flüssigkeit verdrängt wird und dabei aus den Kupplungselementen herausgefördert wird. Diese Leckage ist unerwünscht.

Aus der Druckschrift EP 1 644 656 B1 ist eine Steckkupplung bekannt, die zur Verringerung von Leckageverlusten eine Schiebehülse lehrt, die beim Entkopplungsvorgang über ein stiftförmiges Kupplungsteil geschoben wird. Nachteilig daran ist der sehr komplexe Aufbau der Steckkupplung, was aufgrund der aufwändigen Montage zu hohen Herstellungskosten führt.

Ausgehend hiervon ist es Aufgabe der Erfindung, eine Steckkupplung anzugeben, die einen einfachen Aufbau aufweist und die Koppelverluste verringert.

Die Aufgabe wird durch eine Steckkupplung mit den Merkmalen des unabhängigen Patentanspruchs 1 gelöst. Bevorzugte Ausführungsformen sind Gegenstand der Unteransprüche.

Gemäß einem Aspekt bezieht sich die Erfindung auf eine Steckkupplung. Die Steckkupplung umfasst ein erstes Kupplungselement, das als männliches Kupplungselement ausgebildet ist, und ein zweites Kupplungselement, das als weibliches Kupplungselement ausgebildet ist. Das erste Kupplungselement ist in einen Aufnahmeraum des zweiten Kupplungselements einführbar und nach dem Einführen lösbar verbindbar, um einen durchgehenden Fluidkanal zwischen den beiden Kupplungselementen herzustellen.

Das erste Kupplungselement weist einen ersten Ventilstößel und ein erstes Kupplungselementgehäuse auf. Der erste Ventilstößel ist federbelastet verschiebbar im ersten Kupplungselementgehäuse angeordnet, und zwar derart, dass im entkoppelten Zustand der Steckkupplung der erste Ventilstößel aufgrund der Federbelastung gegenüber einem Dichtsitz, der im ersten Kupplungselementgehäuse ausgebildet ist, anliegt.

Das zweite Kupplungselement weist einen zweiten Ventilstößel und ein zweites Kupplungselementgehäuse auf. Der zweite Ventilstößel ist federbelastet verschiebbar im zweiten Kupplungselementgehäuse angeordnet, und zwar derart, dass im entkoppelten Zustand der Steckkupplung der zweite Ventilstößel aufgrund der Federbelastung gegenüber einem Dichtsitz, der im zweiten Kupplungselementgehäuse ausgebildet ist, anliegt.

Im gekoppelten Zustand der Steckkupplung liegen der erste und zweite Ventilstößel stirnseitig aneinander an und sind durch wechselseitige Krafteinwirkung von deren Dichtsitz abgehoben. Der zweite Ventilstößel weist einen Ventilstößelfortsatz auf, der im gekoppelten Zustand der Steckkupplung stirnseitig zur Anlage gegenüber einer Stirnseite des ersten Ventilstößels ausgebildet ist.

Das zweite Kupplungselement weist eine Leckagedichtung auf, die eine von einem randseitigen Dichtungsabschnitt nach innen abstehende Dichtmembran aufweist. Im entkoppelten Zustand der Steckkupplung steht die Dichtmembran vorzugsweise radial nach innen von dem randseitigen Dichtungsabschnitt ab. Die Dichtmembran weist eine Öffnung auf, die derart ausgebildet ist, dass die Dichtmembran im entkoppelten Zustand der Steckkupplung zur Verhinderung von Leckagen den Ventilstößelfortsatz umfangsseitig dichtend umschließt und die Dichtmembran im gekoppelten Zustand der Steckkupplung durch das erste Kupplungselement derart aufgeweitet ist, dass ein Fluidfluss zwischen dem ersten und zweiten Kupplungselement durch die Öffnung der Dichtmembran hindurch ermöglicht wird.

Der technische Vorteil der Steckkupplung besteht darin, dass trotz eines einfachen Aufbaus der Steckkupplung durch die Leckagedichtung Koppelverluste stark reduziert bzw. verhindert werden.

Gemäß einem Ausführungsbeispiel ist der Querschnittsdurchmesser des Ventilstößelfortsatzes kleiner als der Querschnittsdurchmesser des Ventilstößelabschnitts des zweiten Ventilstößels, das sich unmittelbar an den Ventilstößelfortsatz anschließt. In anderen Worten ist damit der Ventilstößelfortsatz querschnittsreduziert gegenüber einem Ventilstößelabschnitt, an dem das Dichtelement des zweiten Ventilstößels vorgesehen ist. Damit kann der Durchmesser der Öffnung in der Dichtmembran reduziert werden, was vorteilhaft für die Rückstellung der Leckagedichtung in den abdichtenden Zustand beim Entkoppeln der Steckkupplung ist.

Gemäß einem Ausführungsbeispiel ist der Querschnittsdurchmesser des Ventilstößelfortsatzes kleiner als der Querschnittsdurchmesser des ersten Ventilstößels im Bereich dessen Stirnfläche, die zur Anlage gegenüber der Stirnfläche des Ventilstößelfortsatzes vorgesehen ist. Insbesondere ist der Querschnittsdurchmesser des ersten Ventilstößels im Bereich dessen freiendseitiger Stirnfläche mindestens um den Faktor 1,5, bevorzugt mindestens um den Faktor 2 größer als der Querschnittsdurchmesser des Ventilstößelfortsatzes im Bereich dessen freien Endes. Dadurch wird erreicht, dass zwischen dem freien Ende des Ventilstößelfortsatzes und dem freien Ende des ersten Ventilstößels eine sprunghafte Querschnittsänderung besteht, was vorteilhaft für das Verformen der Leckagedichtung ist und ein verbessertes Verlagern des durch den Hub des ersten Ventilstößels geförderten Fluids hinter die Leckagedichtung ermöglicht.

Gemäß einem Ausführungsbeispiel weitet sich der Ventilstößelfortsatz ausgehend von dessen freien Ende konisch auf. Dadurch wird das Umströmen des zweiten Ventilstößels durch die Flüssigkeit verbessert.

Gemäß einem anderen Ausführungsbeispiel weist der Ventilstößelfortsatz im Bereich des freien Endes einen größeren Querschnittsdurchmesser auf als in einem an das freie Ende des Ventilstößelfortsatzes unmittelbar anschließender Mittenbereich des Ventilstößelfortsatzes. Dadurch wird erreicht, dass der Öffnungsdurchmesser der Dichtmembran vergrößert und die radial gemessene Strecke zwischen einem randseitigen Dichtungsabschnitt und dem Rand der Öffnung der Dichtmembran reduziert werden kann. Dadurch kann eine Baugrößenreduzierung der Steckkupplung erreicht werden, da der Aufschwenkbereich der Dichtmembran verkleinert wird.

Gemäß einem Ausführungsbeispiel weist der Ventilstößelfortsatz einen kreisrunden Querschnitt auf. Dadurch kann ein verbessertes Abdichten der Leckagedichtung um den Ventilstößelfortsatz herum ohne Berücksichtigung einer rotativen Ausrichtung des Ventilstößels relativ zur Leckagedichtung erreicht werden.

Gemäß einem Ausführungsbeispiel weist der Ventilstößelfortsatz eine axiale Länge auf, die gleich oder größer ist als die Summe der Hübe, die der erste und zweite Ventilstößel zwischen dem entkoppelten Zustand und dem gekoppelten Zustand der Steckkupplung vollziehen. Die axiale Länge des Ventilstößelfortsatzes wird entlang der Verschieberichtung des zweiten Ventilstößels gemessen, und zwar zwischen dem freien Ende des Ventilstößelfortsatzes und einer Stufung, an der der Ventilstößelfortsatz in einen querschnittsvergrößerten Ventilstößelabschnitt übergeht, an dem das Dichtelement des Ventilstößels vorgesehen ist. Dadurch wird sichergestellt, dass beim Einschieben des ersten Kupplungselements in das zweite Kupplungselement der erste und zweite Ventilstößel in eine vom Dichtsitz abgehobene Stellung verschoben werden und das freie Ende des Kupplungselementgehäuses zugleich unter Verformung der Leckagedichtung in den Aufnahmeraum bewegt wird.

Gemäß einem Ausführungsbeispiel ist die Leckagedichtung tellerartig ausgebildet und die Öffnung, durch die der Ventilstößelfortsatz hindurchgeführt ist, ist zentriert vorgesehen. Dadurch kann beim Einschieben des ersten Kupplungselements in das zweite Kupplungselement die Leckagedichtung entlang des Umfangs gleichmäßig verformt werden.

Gemäß einem Ausführungsbeispiel verschließt die Leckagedichtung im entkoppelten Zustand der Steckkupplung einen Aufnahmeraum, der umfangsseitig um den Ventilstößelfortsatz herum zwischen dem Ventilstößelfortsatz und einer Außenwandung des zweiten Kupplungselementgehäuses gebildet ist, fluiddicht. In diesen Aufnahmeraum wird beim Herausziehen des ersten Kupplungselements aus dem zweiten Kupplungselement die durch die Ventilstößelhübe geförderte Flüssigkeit aufgenommen, so dass diese Flüssigkeit beim Trennvorgang nicht aus den Kupplungselementen ungewollt austreten kann.

Gemäß einem Ausführungsbeispiel überspannt die Leckagedichtung im entkoppelten Zustand der Steckkupplung einen ringartigen Bereich, der sich umfangsseitig um den Ventilstößelfortsatz herum zwischen dem Ventilstößelfortsatz und einer Außenwandung des zweiten Kupplungselementgehäuses erstreckt. Dadurch kann der ringartige Bereich, in den das ringartig ausgebildete freie Ende des ersten Kupplungselements einführbar ist, durch die Leckagedichtung fluiddicht verschlossen werden.

Gemäß einem Ausführungsbeispiel ist die Leckagedichtung derart in dem zweiten Kupplungselementgehäuse angeordnet, dass die Dichtmembran der Leckagedichtung im entkoppelten Zustand der Steckkupplung eine Dichtebene aufspannt, die in axialer Richtung gesehen auf Höhe des freien Endes des Ventilstößelfortsatzes liegt und den Ventilstößelfortsatz fluiddicht umschließt. Damit kann beim Einführen des ersten Kupplungselements in den Aufnahmeraum des zweiten Kupplungselements zunächst die Stirnseite des ersten Ventilstößels gegenüber dem freien Ende des Ventilstößelfortsatzes zur Anlage gelangen, ohne dass dabei die Dichtmembran der Leckagedichtung bereits verformt ist. Anschließend werden bei weiterem Einführen des ersten Kupplungselements in den Aufnahmeraum des zweiten Kupplungselements der erste und zweite Ventilstößel vom Dichtsitz abgehoben und gleichzeitig die Dichtmembran durch das freie Ende des ersten Kupplungselementgehäuses verformt, bis der gekoppelte Zustand der Steckkupplung erreicht ist.

Gemäß einem Ausführungsbeispiel weist die Leckagedichtung im Bereich der Dichtmembran mehrere Bereiche auf, in denen die Wandstärke der Dichtmembran partiell erhöht ist. Die membranverstärkenden Bereiche sind vorzugsweise dazu ausgebildet, die Dehnbarkeit der Leckagedichtung derart zu beeinflussen, dass sich die Dichtmembran der Leckagedichtung radial aufweitet und damit deren Öffnung vergrößert wird, jedoch die Längsdehnung der Dichtmembran in axialer Richtung, d.h. in Richtung der Längsachse der Steckkupplung beim Kopplungsvorgang zumindest teilweise reduziert oder verhindert wird. Die die Wandstärke der Dichtmembran partiell erhöhenden Bereiche verlaufen vorzugsweise zwischen dem randseitigen Dichtungsabschnitt und dem Rand der Öffnung der Dichtmembran, insbesondere in radialer Richtung.

Die membranverstärkenden Bereiche können durch Rippen, Wülste, Reihen von punktuellen Erhebungen etc. gebildet sein.. Durch die die Wandstärke vergrößernden Bereiche kann das Dehnungsverhalten der Dichtmembran beeinflusst werden, und zwar derart, dass die Längsdehnung der Dichtmembran (d.h. senkrecht zu der vom randseitigen Dichtungsabschnitt gebildeten Ebene) reduziert und die Aufdehnung der Öffnung der Dichtmembran gefördert wird.

Gemäß einem Ausführungsbeispiel ist die Dichtmembran der Leckagedichtung derart ausgebildet ist, dass sich diese beim Entkoppeln der Steckkupplung von einer konisch aufgeweiteten Form in eine planare oder im Wesentlichen planare Form rückstellt und am Ventilstößelfortsatz umfangsseitig anliegt. Damit wird erreicht, dass sich die Leckagedichtung nach der Verformung, die im gekoppelten Zustand vorliegt, wieder in die ursprüngliche Ausgangsposition zurückverformt, und der ringartige Bereich, der sich umfangsseitig um den Ventilstößelfortsatz herum zwischen dem Ventilstößelfortsatz und der Außenwandung des zweiten Kupplungselementgehäuses erstreckt, flüssigkeitsdicht verschlossen wird.

Gemäß einem Ausführungsbeispiel weist die Leckagedichtung einen die Dichtmembran umfangsseitig umgebenden, wulstartig ausgebildeten Dichtungsabschnitt auf, der zumindest außenumfangsseitig gegenüber der Außenwandung des zweiten Kupplungselementgehäuses anliegt. Die Leckagedichtung kann beispielsweise mittels eines Klemmrings, der an dem Dichtungsabschnitt angreift, im zweiten Kupplungselementgehäuse gesichert sein.

Gemäß einem Ausführungsbeispiel ist der erste Ventilstößel des ersten Kupplungselements derart ausgebildet, dass die freiendseitig vorgesehene Stirnfläche des ersten Ventilstößels bündig oder im Wesentlichen bündig mit dem freien Ende des ersten Kupplungselementgehäuses abschließt, das in das zweite Kupplungselement einführbar ist. Dadurch wird erreicht, dass beim Entkoppeln der Steckkupplung durch den Hub des Ventilstößels die gesamte oder im Wesentlichen die gesamte Flüssigkeit aus dem Bereich, der vor der Stirnfläche des ersten Ventilstößels liegt, verdrängt und in den Aufnahmeraum hinter der Leckagedichtung transferiert wird. Dadurch kann eine beim Entkoppeln entstehende Leckage zusätzlich verringert werden.

Gemäß einem Ausführungsbeispiel ist das erste und/oder zweite Kupplungselementgehäuse, insbesondere das hülsenförmig ausgebildete Element, das den ersten und zweiten Ventilstößel umgibt, durch ein einteiliges Spritzgussteil gebildet. Dadurch kann der Montageaufwand der Steckkupplung entscheidend verringert werden.

Gemäß einem Ausführungsbeispiel ist das erste Kupplungselementgehäuse zu seinem freien Ende hin zulaufend ausgebildet. Das freie Ende des ersten Kupplungselementgehäuses kann beispielsweise konisch zulaufend ausgebildet sein, d.h. kegelstumpfförmig oder aber eine konvex gewölbte Außenkontur aufweisen. Dadurch wird erreicht, dass beim Koppeln des ersten und zweiten Kupplungselements eine vorteilhafte Verformung der Dichtmembran der Leckagedichtung erreicht wird, da diese beim Kopplungsvorgang trichterartig aufgeweitet wird.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand mehrerer Figuren an Ausführungsbeispielen näher erläutert. Es zeigen:
- Fig. 1: beispielhaft einen Längsschnitt durch eine Steckkupplung entlang einer Mittellängsachse, wobei sich das erste und zweite Kupplungselement in einem teilentkoppelten Zustand befinden, bei dem die ersten und zweiten Ventilstößel stirnseitig aneinander anliegen, sich aber noch im Dichtsitz befinden;
- Fig. 2: beispielhaft einen Längsschnitt ähnlich der Figur 1, wobei sich das erste und zweite Kupplungselement in einer ersten Teileinschubstellung befinden;
- Fig. 3: beispielhaft einen Längsschnitt ähnlich der Figuren 1 und 2, wobei sich das erste und zweite Kupplungselement in einer zweiten Teileinschubstellung befinden;
- Fig. 4: beispielhaft einen Längsschnitt ähnlich der Figuren 1 bis 3, wobei sich das erste und zweite Kupplungselement in einer dritten Teileinschubstellung befinden;
- Fig. 5: beispielhaft einen Längsschnitt ähnlich der Figuren 1 bis 4, wobei sich das erste und zweite Kupplungselement in einer vierten Teileinschubstellung befinden;
- Fig. 6: beispielhaft einen Längsschnitt durch die Steckkupplung gemäß den Figuren 1 bis 5 im gekoppelten Zustand, bei dem das erste Kupplungselement vollständig in das zweite Kupplungselement eingeführt ist, so dass die Ventilstößel von deren Dichtsitz abgehoben sind;
- Fig. 7: beispielhaft einen Längsschnitt durch eine zweite Ausführungsform der Steckkupplung entlang einer Mittellängsachse, wobei sich das erste und zweite Kupplungselement in einem teilentkoppelten Zustand befinden, bei dem die ersten und zweiten Ventilstößel stirnseitig aneinander anliegen, sich aber noch im Dichtsitz befinden;
- Fig. 8: beispielhaft einen Längsschnitt durch die zweite Ausführungsform der Steckkupplung ähnlich der Figur 7, wobei sich das erste und zweite Kupplungselement in einer ersten Teileinschubstellung befinden;
- Fig. 9: beispielhaft einen Längsschnitt durch die zweite Ausführungsform der Steckkupplung ähnlich den Figuren 7 un 8, wobei sich das erste und zweite Kupplungselement in einer zweiten Teileinschubstellung befinden;
- Fig. 10: beispielhaft einen Längsschnitt durch die zweite Ausführungsform der Steckkupplung gemäß den Figuren 7 bis 9 im gekoppelten Zustand, bei dem das erste Kupplungselement vollständig in das zweite Kupplungselement eingeführt ist, so dass die Ventilstößel von deren Dichtsitz abgehoben sind;
- Fig. 11: beispielhaft eine perspektivische und teilweise geschnittene Darstellung der zweiten Ausführungsform der Steckkupplung in einem teilentkoppelten Zustand, bei dem die Dichtmembran noch an dem Ventilstößelfortsatz umfangsseitig anliegt; und
- Fig. 12: beispielhaft eine perspektivische und teilweise geschnittene Darstellung der zweiten Ausführungsform der Steckkupplung im gekoppelten Zustand, bei dem das erste Kupplungselement vollständig in das zweite Kupplungselement eingeführt und die Dichtmembran aufgewölbt ist.

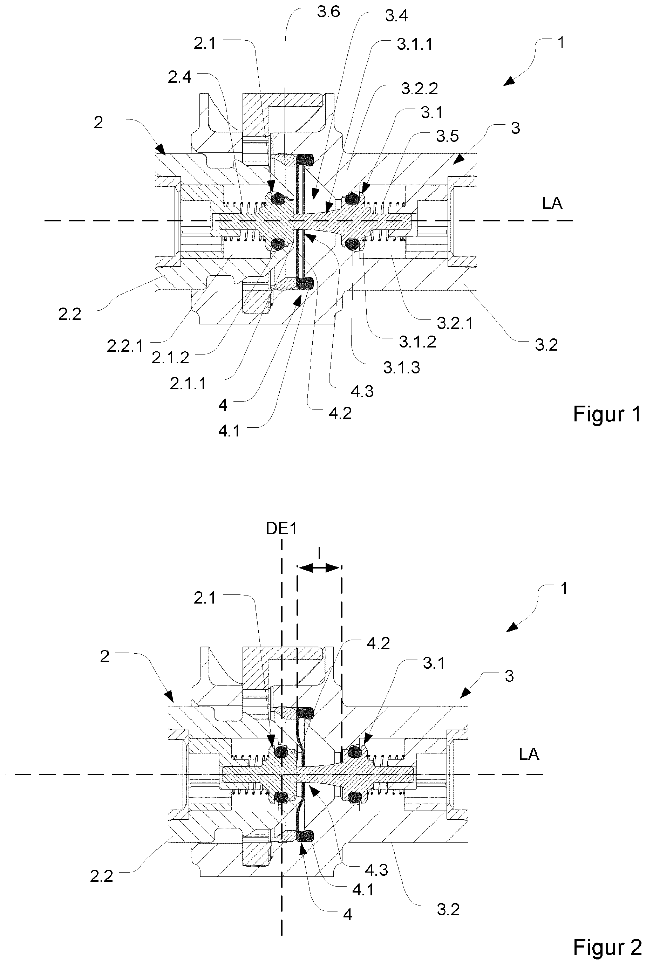

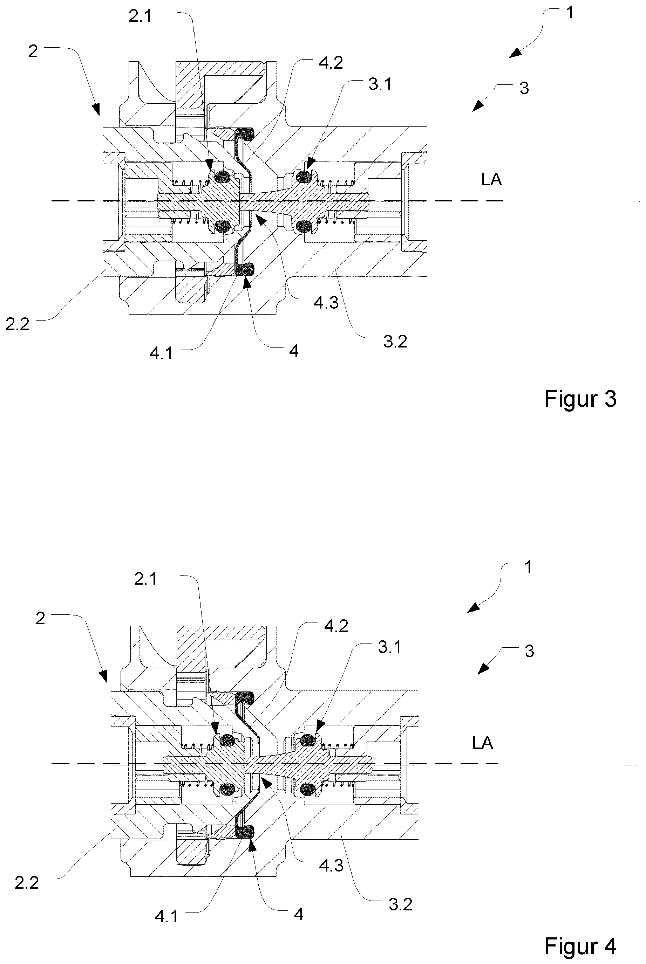

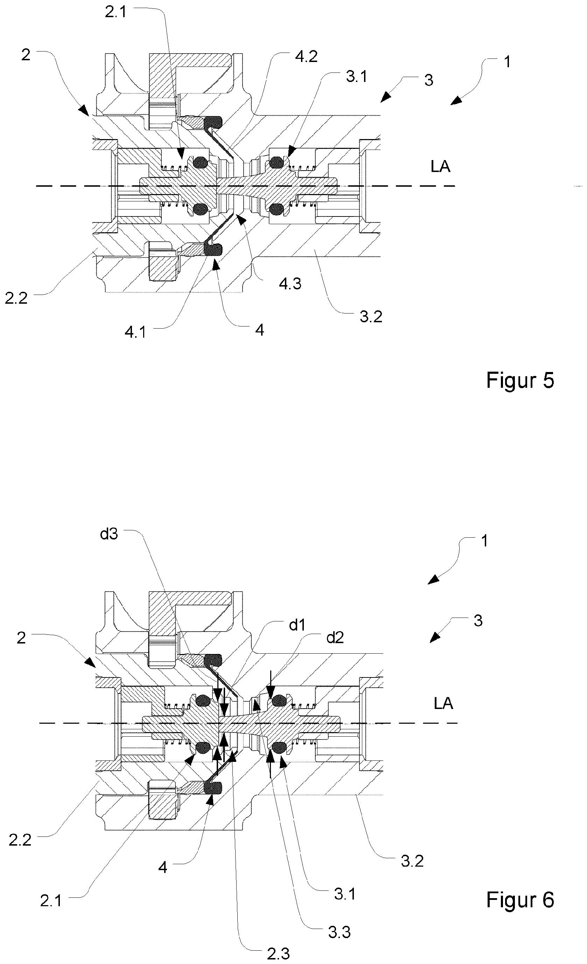

Figuren 1 bis 6 zeigen jeweils Schnittdarstellungen einer Steckkupplung 1 in unterschiedlichen Kopplungszuständen, wobei Figur 1 den entkoppelten Zustand und Fig. 6 den gekoppelten Zustand zeigen und die Figuren 2 bis 5 jeweils Zwischenzustände, die die Steckkupplung 1 zwischen dem entkoppelten Zustand und dem gekoppelten Zustand einnehmen.

Die Steckkupplung 1 ist dazu ausgebildet, eine flüssigkeitsdichte, lösbare Verbindung zwischen den Enden zweier Schlauch- oder Rohrstücke herzustellen.

Die Steckkupplung 1 umfasst ein erstes Kupplungselement 2 und ein zweites Kupplungselement 3. Das erste Kupplungselement 2 ist als männliches Kupplungselement ausgebildet, das zweite Kupplungselement als weibliches Kupplungselement.

Das erste Kupplungselement 2 weist einen ersten Ventilstößel 2.1 und ein erstes Kupplungselementgehäuse 2.2 auf. Der erste Ventilstößel 2.1 weist ein Dichtelement 2.1.2, insbesondere einen Dichtring auf. Der erste Ventilstößel 2.1 ist axial verschiebbar in dem ersten Kupplungselementgehäuse 2.2 vorgesehen. Er wird im entkoppelten Zustand der Steckkupplung 1 durch eine Feder 2.4 in einer ersten Position gehalten, in der der erste Ventilstößel 2.1 in Dichtlage gegenüber einem im ersten Kupplungselementgehäuse 2.2 ausgebildeten Ventilsitz bzw. Dichtsitz 2.3 anliegt.

In dem ersten Kupplungselementgehäuse 2.2 ist ein Fluidkanal 2.2.1 ausgebildet, der mittels des ersten Ventilstößels 2.1 verschlossen ist, wenn der erste Ventilstößel 2.1 auf dem Ventilsitz bzw. Dichtsitz 2.3 anliegt. Wenn sich der erste Ventilstößel 2.1 entgegen der Federkraft in einer geöffneten Position befindet, d.h. vom Dichtsitz 2.3 abgehoben ist, ist der Fluidkanal 2.2.1 geöffnet, so dass das Fluid durch das erste Kupplungselementgehäuse 2.2 strömen kann.

Das erste Kupplungselementgehäuse 2.2 kann an dem freien Ende, das dem Ventilsitz bzw. Dichtsitz 2.3 gegenüberliegt, dazu eingerichtet sein, eine Schlauchkupplung aufzunehmen oder eine solche Schlauchkupplung aufweisen.

In analoger Weise weist das zweite Kupplungselement 3 einen zweiten Ventilstößel 3.1 und ein zweites Kupplungselementgehäuse 3.2 auf. Der zweite Ventilstößel 3.1 weist ein Dichtelement 3.1.3, insbesondere einen Dichtring auf. Der zweite Ventilstößel 3.1 ist axial verschiebbar in dem zweiten Kupplungselementgehäuse 3.2 vorgesehen. Er wird im entkoppelten Zustand der Steckkupplung 1 durch eine Feder 3.5 in einer ersten Position gehalten, in der der zweite Ventilstößel 3.1 in Dichtlage gegenüber einem im zweiten Kupplungselementgehäuse 3.2 ausgebildeten Ventilsitz bzw. Dichtsitz 3.3 anliegt.

In dem zweiten Kupplungselementgehäuse 3.2 ist ein Fluidkanal 3.2.1 ausgebildet, der mittels des zweiten Ventilstößels 3.1 verschlossen ist, wenn der zweite Ventilstößel 3.1 auf dem Ventilsitz bzw. Dichtsitz 3.3 anliegt. Wenn sich der zweite Ventilstößel 3.1 entgegen der Federkraft in einer geöffneten Position befindet, d.h. vom Dichtsitz 3.3 abgehoben ist, ist der Fluidkanal 3.2.1 geöffnet, so dass das Fluid durch das zweite Kupplungselementgehäuse 3.2 strömen kann.

Das zweite Kupplungselementgehäuse 3.2 kann an dem freien Ende, das dem Ventilsitz bzw. Dichtsitz 3.3 gegenüberliegt, dazu eingerichtet sein, eine Schlauchkupplung aufzunehmen oder eine solche Schlauchkupplung aufweisen.

Wie in den Figuren ersichtlich, lässt sich das erste Kupplungselement 2 in einen im zweiten Kupplungselement 3 ausgebildeten Aufnahmeraum 3.4 einführen und dort durch Verrasten lösbar fixieren. Die vollständig eingeschobene Position des ersten Kupplungselements 2 und damit der gekoppelte Zustand der Steckverbindung ist in Fig. 6 gezeigt.

Beim Einführen des ersten Kupplungselements 2 in das zweite Kupplungselement gelangen die Stirnseiten des ersten und zweiten Ventilstößels 2.1, 3.1, die an den freien Enden der Ventilstößel 2.1, 3.1 vorgesehen sind, gegeneinander zur Anlage. Bei der Einschiebebewegung üben diese aufeinander eine entgegen der Federkraft der Federn 2.4, 3.5 gerichtete Kraft aus, so dass die ersten und zweiten Ventilstößel 2.1, 3.1 von deren Dichtsitz abgehoben werden und jeweils den Fluidkanal 2.2.1, 3.2.1 freigeben. Durch die Ventilstößel 2.1, 3.1 wird damit erreicht, dass im gekoppelten Zustand der Steckkupplung 1 die Flüssigkeit durch die Steckkupplung 1 fließen kann und im entkoppelten Zustand die Fluidkanäle 2.2.1, 3.2.1 der Kupplungselemente 2, 3 durch die Ventilstößel 2.1, 3.1 fluiddicht verschlossen sind.

Der erste und zweite Ventilstößel 2.1, 3.1 ist im Bereich dessen jeweiligen freien Endes (das Ende, an dem jeweils die Stirnseite vorgesehen ist, gegenüber der das jeweils andere Ventilstößel zur Anlage gelangt) unterschiedlich geformt ausgebildet. Der erste Ventilstößel 2.1 weist am stirnseitigen freien Ende einen Stirnabschnitt 2.1.1 auf, der unmittelbar angrenzend an den Dichtring 2.1.2 vorgesehen ist. Vorzugsweise ist der Stirnabschnitt 2.1.1 freiendseitig derart dimensioniert, dass die im zweiten Kupplungselementgehäuse 3 2 stirnseitig vorgesehene Durchflussöffnung 2.5 durch das freie Ende des ersten Ventilstößels 2.1 vollständig oder im Wesentlichen vollständig ausgefüllt wird. Insbesondere weist der Stirnabschnitt 2.1.1 einen Durchmesser d3 auf, der an den Durchmesser der Durchflussöffnung 2.5 angepasst ist, um diese vollständig oder im Wesentlichen vollständig zu verschließen. In anderen Worten ist die Form und Größe des Stirnabschnitts 2.1.1 passgenau auf die Durchflussöffnung 2.5 angepasst, um beim Entkoppeln das darin befindliche Fluid vollständig oder im Wesentlichen vollständig zu verdrängen.

Das Dichtelement 2.1.2 liegt in einer ersten Dichtebene DE1 des ersten Ventilstößels 2.1. Der in Verschieberichtung des ersten Ventilstößels 2.1 gemessene Abstand der Stirnfläche des Stirnabschnitts 2.1.1 zur ersten Dichtebene DE1 ist kleiner als der Hub, den das erste Ventilstößel 2.1 zwischen dem entkoppelten und dem gekoppelten Zustand vollzieht. Insbesondere ist dieser Abstand kleiner als der halbe Hub des ersten Ventilstößels 2.1. Damit liegt die Stirnfläche sehr nahe an der ersten Dichtebene DE1, so dass bei der Schließbewegung des ersten Ventilstößels 2.1 das gesamte oder im Wesentlichen gesamte vor dem Ventilstößel 2.1 bewegte Fluid aus dem Fluidkanal verdrängt wird.

Im Gegensatz dazu weist der zweite Ventilstößel 3.1 einen Ventilstößelfortsatz 3.1.1 auf, der von dem Ventilstößelabschnitt 3.1.2, an dem das Dichtelement 3.1.3 vorgesehen ist, absteht. Am freien Ende des Ventilstößelfortsatzes 3.1.2 ist die Stirnfläche vorgesehen, die bei Kopplung des ersten und zweiten Kupplungselements 2, 3 zur Anlage gegenüber dem Stirnabschnitt 2.1.1 und der daran vorgesehenen Stirnfläche des ersten Ventilstößels 2.1 gelangt.

Der Ventilstößelfortsatz 3.1.1 ist beispielsweise stabförmig ausgebildet. Er weist eine Länge I auf, die größer ist als der Abstand der Stirnfläche des Stirnabschnitts 2.1.1 des ersten Ventilstößels 2.1 zur ersten Dichtebene DE1. Insbesondere ist die Länge I des Ventilstößelfortsatzes 3.1.1 gleich oder größer als die Summe der Hübe, die der erste und zweite Ventilstößel 2.1, 3.1 zwischen dem entkoppelten und dem gekoppelten Zustand vollziehen.

Der Ventilstößelfortsatz 3.1.1 kann einen runden Querschnitt aufweisen. Der Durchmesser d1 des Ventilstößelfortsatzes 3.1.1 im Bereich dessen freien Endes ist vorzugsweise kleiner der Durchmesser d3 des Stirnabschnitts 2.1.1 des ersten Ventilstößels 2.1 im Bereich dessen freien Endes. Insbesondere ist der Durchmesser d1 des Ventilstößelfortsatzes 3.1.1 im Bereich dessen freien Endes kleiner als der halbe Durchmesser d3 des Stirnabschnitts 2.1.1 des ersten Ventilstößels 2.1 im Bereich dessen freien Endes.

Des Weiteren ist der Durchmesser d1 des Ventilstößelfortsatzes 3.1.1 kleiner als der Durchmesser d2 des Ventilstößelabschnitts 3.1.2 des zweiten Ventilstößels 3.2, der sich unmittelbar an den Ventilstößelfortsatz 3.1.1 anschließt.

Der Ventilstößelfortsatz 3.1.1 ist vorzugsweise konisch ausgebildet und weitet sich ausgehend vom freien Ende in Richtung des Ventilstößelabschnitts 3.1.2, an dem das Dichtelement 3.1.3 vorgesehen ist, auf. Dadurch kann ein verbessertes Umströmen des Ventilstößels 3.1 erreicht werden.

Zur Verhinderung von Leckagen beim Entkopplungsvorgang, d.h. beim Herausziehen des ersten Kupplungselements 2 aus dem zweiten Kupplungselement 3, ist eine Leckagedichtung 4 vorgesehen. Die Leckagedichtung 4 ist dazu ausgebildet, das durch den Hub der Ventilstößel 2.1, 3.1 geförderte Fluid in dem Aufnahmeraum 3.4 zurückzuhalten und dadurch ein Herauslaufen der Flüssigkeit aus den Kupplungselementen 2, 3 zu verhindern.

Die Leckagedichtung 4 ist in dem Aufnahmeraum 3.4 des zweiten Kupplungselements 3 angeordnet. Die Leckagedichtung 4 ist tellerartig ausgebildet. Sie weist einen randseitigen Dichtungsabschnitt 4.1 auf, der insbesondere wulstartig ausgebildet sein kann. Mittels des randseitigen Dichtungsabschnitts 4.1 wird die Leckagedichtung 4 in dem zweiten Kupplungselementgehäuse 3.2 fixiert. Im gezeigten Ausführungsbeispiel ist beispielsweise in der Außenwandung 3.2.2 des zweiten Kupplungselementgehäuses 3.2 eine Nut oder Einkerbung vorgesehen, in den der randseitige Dichtungsabschnitt 4.1 eingebracht ist. Die Leckagedichtung 4 kann beispielsweise mittels eines Fixierrings 3.6 in Position gehalten sein. Alternativ ist es möglich, dass der randseitige Dichtungsabschnitt 4.1 der Leckagedichtung 4 derart ausgebildet ist, dass dieser selbstfixierend ist, d.h. ohne weitere Fixierungsmittel (beispielsweise den Fixierring 3.6) in dem zweiten Kupplungselementgehäuse 3.2 gehalten wird.

Die Leckagedichtung 4 weist zudem eine Dichtmembran 4.2 auf, die sich von dem randseitigen Dichtungsabschnitt 4.1 nach innen erstreckt. Die Dichtmembran 4.2 weist eine Öffnung 4.3 auf, die vorzugsweise zentriert angeordnet ist. Im entkoppelten Zustand (s. Fig. 1) erstreckt sich die Dichtmembran 4.2 ausgehend von dem randseitigen Dichtungsabschnitt 4.1 radial nach innen, beispielsweise derart, dass die Dichtmembran 4.2 in einer Ebene zu liegen kommt, die senkrecht zur Längsachse LA der Steckkupplung 1 verläuft, entlang der der erste und zweite Ventilstößel 2.1, 2.2 verschiebbar sind. Alternativ ist es möglich, dass die Dichtmembran 4.2 im entkoppelten Zustand eine konische Grundform aufweist. Die Dichtmembran 4.2 ist derart in dem zweiten Kupplungselementgehäuse 3.2 angeordnet, dass die Ebene, in der der randseitige Dichtungsabschnitt 4.1 liegt, im Bereich des freien Endes des Ventilstößelfortsatzes 3.1.1 angeordnet ist.

Der Ventilstößelfortsatz 3.1.1 ist durch die Öffnung 4.3 der Dichtmembran 4.2 hindurchgeführt. Der Durchmesser der Öffnung 4.3 ist gleich oder im Wesentlichen gleich zu dem Durchmesser d1 des Ventilstößelfortsatzes 3.1.1 im Bereich dessen freien Endes. Dadurch wird der Aufnahmeraum 3.4 des zweiten Kupplungselements 3 im entkoppelten Zustand der Steckkupplung umfangsseitig flüssigkeitsdicht abgeschlossen, so dass die im Aufnahmeraum 3.4 vorhandene Flüssigkeit nicht austreten kann.

Wenn das erste Kupplungselement 2 in den Aufnahmeraum 3.4 des zweiten Kupplungselements eingeführt wird, wie das schrittweise in den Figuren 2 bis 6 dargestellt wird, werden zum einen der erste und zweite Ventilstößel 2.1, 3.1 im ersten bzw. zweiten Kupplungselementgehäuse 2.2, 3.2 verschoben und dabei von den jeweiligen Dichtsitzen abgehoben. Dadurch wird der Fluidfluss durch die Steckkupplung 1 ermöglicht. Beim Einführen des ersten Kupplungselements 2 wird zudem die Dichtmembran 4.2 verformt und die Öffnung 4.3 vergrößert, so dass die Dichtmembran 4.2 von der Umfangsseite des Ventilstößelfortsatzes 3.1.1 abgehoben und der Fluidfluss durch die Leckagedichtung 4 hindurch ermöglicht wird. Insbesondere gelangt beim Einschieben des ersten Kupplungselements 2 das freie Ende des zweiten Kupplungselementgehäuses 3.2 zur Anlage gegenüber der Dichtmembran 4.2, wodurch die Dichtmembran 4.2 verformt und die Öffnung 4.3 aufgeweitet wird. Vorzugsweise ist das freie Ende des ersten Kupplungselements 2 zum freien Ende hin trichterförmig oder konisch zulaufend ausgebildet, wodurch das Aufweiten oder Verformen der Dichtmembran 4.2 erleichtert wird.

Wenn beim Entkopplungsvorgang das erste Kupplungselement 2 aus dem Aufnahmeraum 3.4 herausgezogen wird und sich dabei der erste und zweite Ventilstößel 2.1, 3.1 in Richtung Dichtlage verschiebt, wird die durch die Ventilstößel 2.1, 3.1 verdrängte Flüssigkeit in dem Aufnahmeraum 3.4 aufgenommen und durch die Leckagedichtung 4 in dem Aufnahmeraum 3.4 gehalten, so dass nach dem Entkoppeln der Steckkupplung 1 die Flüssigkeit nicht aus dem Aufnahmeraum entweichen kann. Dies wird dadurch erreicht, dass die Dichtmembran der Leckagedichtung 4 um den Ventilstößelfortsatz 3.1.1 herum dichtend abschließt.

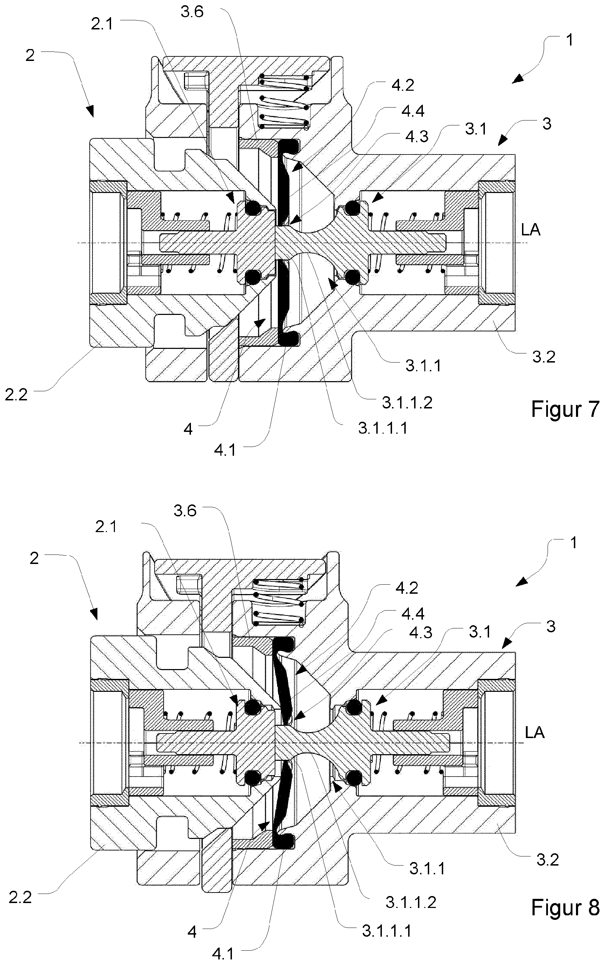

Figuren 7 bis 10 zeigen eine zweite Ausführungsform der Steckkupplung 1 in unterschiedlichen Einschubstellungen.

Nachfolgend werden lediglich die Unterschiede zu der zuvor beschriebenen ersten Ausführungsform beschrieben. Im Übrigen gelten die vorherigen Ausführungen auch für die zweite Ausführungsform.

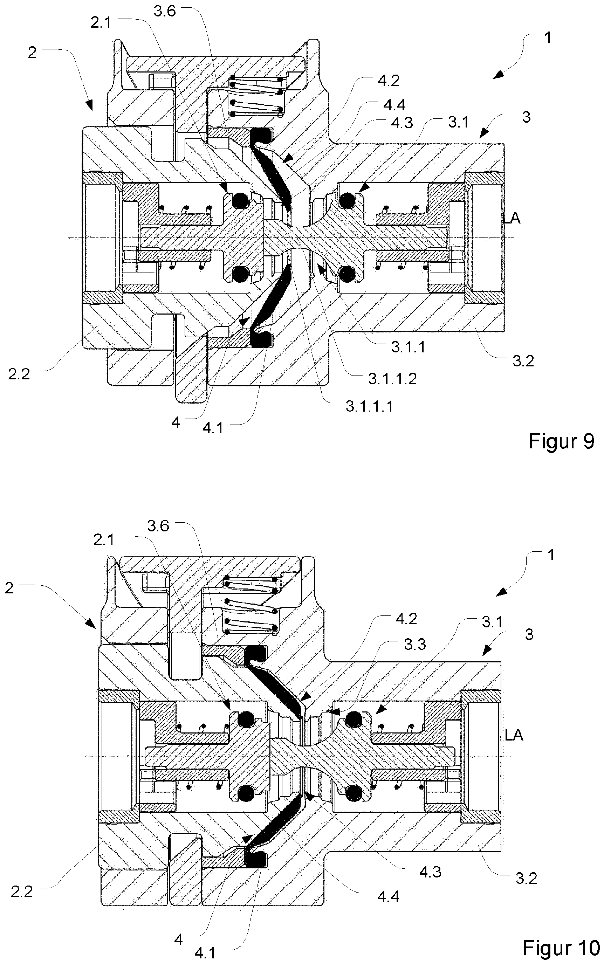

Der erste wesentliche Unterschied der zweiten Ausführungsform zur ersten Ausführungsform besteht darin, dass die Dichtmembran 4 im Bereich der Dichtmembran 4.2 Bereiche 4.4 aufweist, in denen die Wandstärke der Dichtmembran 4.2 partiell vergrößert ist. Diese Bereiche 4.4 sind umfangsseitig verteilt auf der Dichtmembran 4.2 vorgesehen. Die membranverstärkenden Bereiche 4.4 sind beispielsweise dazu ausgebildet, die Dehnbarkeit der Leckagedichtung 4 in radialer Richtung zu ermöglichen, jedoch in axialer Richtung, d.h. in Richtung der Längsachse LA der Steckkupplung 1, zu beschränken bzw. zu verhindern. Im gezeigten Ausführungsbeispiel weisen die membranverstärkenden Bereiche 4.4 jeweils eine Rippe auf. Diese Rippen verlaufen zwischen dem randseitigen Dichtungsabschnitt 4.1 und der Öffnung 4.3. Insbesondere verlaufen die Rippen radial und bilden auf der dem Dichtsitz 3.3 zugewandten Seite Stege bzw. Wülste aus, mittels denen die Wandstärke der Dichtmembran partiell erhöht ist. Die Rippen bilden insbesondere eine sternförmige Höhenkonturierung auf der Dichtmembran 4.2. Alternativ zu den Rippen können auch andere membranverstärkende Konturen verwendet werden, beispielsweise zwischen dem randseitigen Dichtungsabschnitt 4.1 und der Öffnung 4.3 verlaufende Reihen von punktförmigen Erhebungen oder anderen in radialer Richtung segmentierten Konturen. Der technische Vorteil der auf der Dichtmembran 4.2 vorgesehenen membranverstärkenden Bereiche 4.4 besteht darin, dass diese eine unerwünschte Längsdehnung der Leckagedichtung ohne Aufweitung der Öffnung 4.3 verhindern und vielmehr beim Kopplungsvorgang die in den Figuren 9 und 10 gezeigte Aufweitung der Dichtmembran 4.2, die zu einer Vergrößerung der Öffnung 4.3 führt, begünstigen.

Der zweite wesentliche Unterschied der zweiten Ausführungsform gegenüber der ersten Ausführungsform besteht darin, dass der Ventilstößelfortsatz 3.1.1 im Bereich dessen freien Endes 3.1.1.1 einen größeren Durchmesser aufweist als in dessen Mittelbereich 3.1.1.2. In anderen Worten weist der Ventilstößelfortsatz 3.1.1 im Mittelbereich 3.1.1.2 eine den Durchmesser reduzierende Querschnittsverjüngung auf. Durch den größeren Durchmesser des Ventilstößelfortsatzes 3.1.1 im Bereich dessen freien Endes 3.1.1.1 wird erreicht, dass der Durchmesser der Öffnung 4.3 der Leckagedichtung 4 vergrößert werden kann und sich dadurch die radial gemessene Strecke zwischen dem randseitigen Dichtungsabschnitt 4.1 und dem Rand der Öffnung 4.3 der Dichtmembran 4.2 reduziert, so dass der für das Aufnehmen der aufgedehnten Dichtmembran 4.2 nötige Bauraum reduziert wird. Dadurch kann die Baugröße der Steckkupplung 1 reduziert werden. Die Querschnittsverjüngung im Mittelbereich 3.1.1.2 des Ventilstößelfortsatzes 3.1.1 bewirkt, dass trotz des vergrößerten Durchmessers des Ventilstößelfortsatzes 3.1.1 im gekoppelten Zustand ein ausreichend großer Fluidkanalquerschnitt im Bereich des Dichtsitzes 3.3 vorhanden ist. An dem Ventilstößelfortsatz 3.1.1 des ersten und zweiten Ausführungsbeispiels der Steckkupplung 1 kann eine Stufung vorgesehen sein, wobei die Stufung derart ausgebildet ist, dass der Ventilstößelfortsatz 3.1.1 von dessen freien Ende in Richtung des Ventilstößelabschnitts 3.1.2 gesehen eine sprungartige Durchmesserveränderung von einem größeren Durchmesser auf einen kleineren Durchmesser aufweist. Die dadurch entstehende Schulter kann eine Anlagefläche für den Rand der Öffnung 4.3 der Leckagedichtung 4 bilden, um eine definierte Stellung der Dichtmembran 4.2 im Schließzustand zu erhalten.

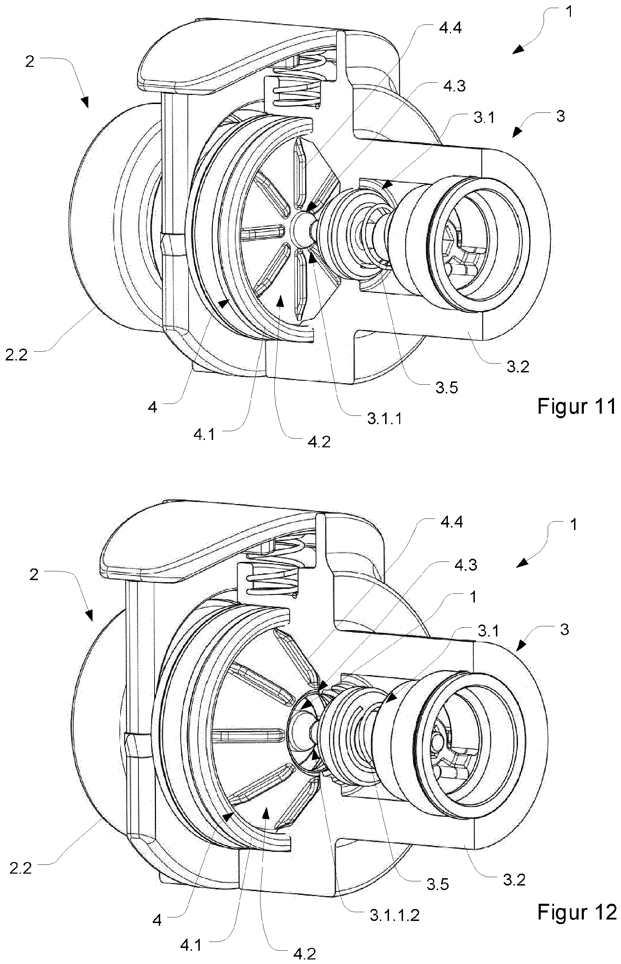

Figuren 11 und 12 zeigen eine perspektivische und teilweise geschnittene Darstellung der Steckkupplung in unterschiedlichen Kopplungszuständen, und zwar Fig. 11 die Steckkupplung 1 im entkoppelten Zustand und Fig. 12 die Steckkupplung im vollständig gekoppelten Zustand.

In diesen Figuren sind zum einen die radial verlaufenden Rippen 4.4 der Dichtmembran 4.2 zu erkennen.

Ferner ist in Fig. 11 die Ausrichtung der Dichtmembran 4.2 in einer Ebene senkrecht zur Längsachse LA der Steckkupplung 1 und in Fig. 12 die aufgrund des Einschiebens des ersten Kupplungselements 2 aufgewölbte Dichtmembran 4.2 zu erkennen, wobei durch die Aufwölbung die Dichtmembran 4.2 von dem Ventilstößelfortsatz 3.1.1 abgehoben wird, so dass ein Fluidfluss zwischen den Kupplungselementen 2, 3 ermöglicht wird.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Steckkupplung
- 2: erstes Kupplungselement
- 2.1: erster Ventilstößel
- 2.1.1: Stirnabschnitt
- 2.1.2: Dichtelement
- 2.2: erstes Kupplungselementgehäuse
- 2.2.1: Fluidkanal
- 2.3: Dichtsitz
- 2.4: Feder
- 3: zweites Kupplungselement
- 3.1: zweiter Ventilstößel
- 3.1.1: Ventilstößelfortsatz
- 3.1.1.1: freies Ende des Ventilstößelfortsatzes
- 3.1.1.2: Mittelbereich des Ventilstößelfortsatzes
- 3.1.2: Ventilstößelabschnitt
- 3.1.3: Dichtelement
- 3.2: zweites Kupplungselementgehäuse
- 3.2.1: Fluidkanal
- 3.2.2: Außenwandung
- 3.3: Dichtsitz
- 3.4: Aufnahmeraum
- 3.5: Feder
- 3.6: Fixierung
- 4: Leckagedichtung
- 4.1: randseitiger Dichtungsabschnitt
- 4.2: Dichtmembran
- 4.3: Öffnung
- 4.4: membranverstärkender Bereich
- d1: Durchmesser
- d2: Durchmesser
- d3: Durchmesser

- DE1: Dichtebene des ersten Ventilstößels

- I: Länge Ventilstößelfortsatz
- LA: Längsachse

## Patentansprüche

1. Steckkupplung umfassend ein erstes Kupplungselement (2), das als männliches Kupplungselement ausgebildet ist, und ein zweites Kupplungselement (3), das als weibliches Kupplungselement ausgebildet ist, wobei das erste Kupplungselement (2) einen ersten Ventilstößel (2.1) und ein erstes Kupplungselementgehäuse (2.2) aufweist, wobei der erste Ventilstößel (2.1) federbelastet verschiebbar im ersten Kupplungselementgehäuse (2.2) angeordnet ist und im entkoppelten Zustand der Steckkupplung (1) aufgrund der Federbelastung gegenüber einem Dichtsitz (2.3) anliegt, wobei das zweite Kupplungselement (3) einen zweiten Ventilstößel (3.1) und ein zweites Kupplungselementgehäuse (3.2) aufweist, wobei das zweite Ventilstößel (3.1) federbelastet verschiebbar im zweiten Kupplungselementgehäuse (3.2) angeordnet ist und im entkoppelten Zustand der Steckkupplung (1) aufgrund der Federbelastung gegenüber einem Dichtsitz (3.3) anliegt, wobei im gekoppelten Zustand der Steckkupplung (1) der erste und zweite Ventilstößel (2.1, 3.1) stirnseitig aneinander anliegen und durch wechselseitige Krafteinwirkung von deren Dichtsitz (2.3, 3.3) abgehoben sind, wobei der zweite Ventilstößel (3.1) einen Ventilstößelfortsatz (3.1.1) aufweist, der im gekoppelten Zustand der Steckkupplung (1) stirnseitig zur Anlage gegenüber einer Stirnseite des ersten Ventilstößels (2.1) ausgebildet ist, wobei das zweite Kupplungselement (3) eine Leckagedichtung (4) aufweist, die eine von einem randseitigen Dichtungsabschnitt (4.1) nach innen abstehende Dichtmembran (4.2) aufweist, wobei die Dichtmembran (4.2) eine Öffnung (4.3) aufweist, die derart ausgebildet ist, dass die Dichtmembran (4.2) im entkoppelten Zustand der Steckkupplung (1) zur Verhinderung von Leckagen den Ventilstößelfortsatz (3.1.1) umfangsseitig dichtend umschließt und die Dichtmembran (4.2) im gekoppelten Zustand der Steckkupplung (1) durch das erste Kupplungselement (2) derart aufgeweitet ist, dass ein Fluidfluss zwischen dem ersten und zweiten Kupplungselement (2, 3) durch die Öffnung (4.3) der Dichtmembran (4.2) hindurch ermöglicht wird.

2. Steckkupplung nach Anspruch 1, **dadurch gekennzeichnet, dass** der Querschnittsdurchmesser (d1) des Ventilstößelfortsatzes (3.1.1) kleiner ist als der Querschnittsdurchmesser (d2) des Ventilstößelabschnitts (3.1.2) des zweiten Ventilstößels (3.1), das sich unmittelbar an den Ventilstößelfortsatz (3.1.1) anschließt.

3. Steckkupplung nach Anspruch 1 oder 2, **dadurch gekennzeichnet, dass** der Querschnittsdurchmesser (d1) des Ventilstößelfortsatzes (3.1.1) kleiner ist als der Querschnittsdurchmesser (d3) des ersten Ventilstößels (2.1) im Bereich dessen Stirnfläche, die zur Anlage gegenüber der Stirnfläche des Ventilstößelfortsatzes (3.1.1) vorgesehen ist.

4. Steckkupplung nach einem der vorhergehenden Ansprüche, **dadurch gekennzeichnet, dass** der Ventilstößelfortsatz (3.1.1) einen kreisrunden Querschnitt aufweist.

5. Steckkupplung nach einem der vorhergehenden Ansprüche, **dadurch gekennzeichnet, dass** der Ventilstößelfortsatz (3.1.1) eine axiale Länge (I) aufweist, die gleich oder größer ist als die Summe der Hübe, die der erste und zweite Ventilstößel (2.1, 3.1) zwischen dem entkoppelten Zustand und dem gekoppelten Zustand der Steckkupplung (1) vollzieht.

6. Steckkupplung nach einem der vorhergehenden Ansprüche, **dadurch gekennzeichnet, dass** die Leckagedichtung (4) tellerartig ausgebildet ist und die Öffnung (4.3), durch die der Ventilstößelfortsatz (3.1.1) hindurchgeführt ist, zentriert vorgesehen ist.

7. Steckkupplung nach einem der vorhergehenden Ansprüche, **dadurch gekennzeichnet, dass** die Leckagedichtung (4) im entkoppelten Zustand der Steckkupplung (1) einen Aufnahmeraum (3.4), der umfangsseitig um den Ventilstößelfortsatz (3.1.1) herum zwischen dem Ventilstößelfortsatz (3.1.1) und einer Außenwandung (3.2.1) des zweiten Kupplungselementgehäuses (3.2) gebildet ist, fluiddicht verschließt.

8. Steckkupplung nach einem der vorhergehenden Ansprüche, **dadurch gekennzeichnet, dass** die Leckagedichtung (4) auf der Dichtmembran (4.2) mehrere umfangsseitig verteilt angeordnete Bereiche (4.4) aufweist, in denen die Wandstärke der Dichtmembran partiell erhöht ist, wobei die Bereiche (4.4) von einem randseitigen Dichtungsabschnitt (4.1) in Richtung der Öffnung (4.3) der Dichtmembran (4.2) verlaufen.

9. Steckkupplung nach einem der vorhergehenden Ansprüche, **dadurch gekennzeichnet, dass** die Bereiche (4.4) jeweils durch eine Rippe oder eine Reihe von mehreren aufeinanderfolgenden Erhebungen gebildet werden.

10. Steckkupplung nach einem der vorhergehenden Ansprüche, **dadurch gekennzeichnet, dass** die Leckagedichtung (4) im entkoppelten Zustand der Steckkupplung (1) einen ringartigen Bereich, der sich umfangsseitig um den Ventilstößelfortsatz (3.1.1) herum zwischen dem Ventilstößelfortsatz (3.1.1) und einer Außenwandung (3.2.1) des zweiten Kupplungselementgehäuses (3.2) erstreckt, überspannt.

11. Steckkupplung nach einem der vorhergehenden Ansprüche, **dadurch gekennzeichnet, dass** die Leckagedichtung (4) derart in dem zweiten Kupplungselementgehäuse (3.2) angeordnet ist, dass die Dichtmembran (4.2) der Leckagedichtung (4) im entkoppelten Zustand der Steckkupplung (1) eine Dichtfläche aufspannt, wobei der die Öffnung 4.3 bildende Rand der Dichtmembran (4.2) in axialer Richtung gesehen im Bereich des freien Endes des Ventilstößelfortsatzes (3.1.1) liegt und den Ventilstößelfortsatz (3.1.1) fluiddicht umschließt.

12. Steckkupplung nach einem der vorhergehenden Ansprüche, **dadurch gekennzeichnet, dass** die Dichtmembran (4.2) der Leckagedichtung (4) derart ausgebildet ist, dass sich diese beim Entkoppeln der Steckkupplung (1) von einer konisch aufgeweiteten Form in eine planare oder konische Form mit geringerer Konushöhe rückstellt und der die Öffnung (4.3) bildende Rand der Dichtmembran (4.2) am Ventilstößelfortsatz (3.1.1) umfangsseitig anliegt.

13. Steckkupplung nach einem der vorhergehenden Ansprüche, **dadurch gekennzeichnet, dass** der erste Ventilstößel (2.1) des ersten Kupplungselements (2) derart ausgebildet ist, dass die freiendseitig vorgesehene Stirnfläche des ersten Ventilstößels (2.1) bündig oder im Wesentlichen bündig mit dem freien Ende des ersten Kupplungselementgehäuses (2.2) abschließt, das in das zweite Kupplungselement (3) einführbar ist.

14. Steckkupplung nach einem der vorhergehenden Ansprüche, **dadurch gekennzeichnet, dass** das erste und/oder zweite Kupplungselementgehäuse (2.2, 3.2) durch ein einteiliges Spritzgussteil gebildet ist.

15. Steckkupplung nach einem der vorhergehenden Ansprüche, **dadurch gekennzeichnet, dass** das erste Kupplungselementgehäuse (2.2) zu seinem freien Ende hin zulaufend ausgebildet ist.

## Geänderte Patentansprüche

### Geänderte Patentansprüche gemäss Regel 137(2) EPÜ.

1. Steckkupplung umfassend ein erstes Kupplungselement (2), das als männliches Kupplungselement ausgebildet ist, und ein zweites Kupplungselement (3), das als weibliches Kupplungselement ausgebildet ist, wobei das erste Kupplungselement (2) einen ersten Ventilstößel (2.1) und ein erstes Kupplungselementgehäuse (2.2) aufweist, wobei der erste Ventilstößel (2.1) federbelastet verschiebbar im ersten Kupplungselementgehäuse (2.2) angeordnet ist und im entkoppelten Zustand der Steckkupplung (1) aufgrund der Federbelastung gegenüber einem Dichtsitz (2.3) anliegt, wobei das zweite Kupplungselement (3) einen zweiten Ventilstößel (3.1) und ein zweites Kupplungselementgehäuse (3.2) aufweist, wobei das zweite Ventilstößel (3.1) federbelastet verschiebbar im zweiten Kupplungselementgehäuse (3.2) angeordnet ist und im entkoppelten Zustand der Steckkupplung (1) aufgrund der Federbelastung gegenüber einem Dichtsitz (3.3) anliegt, wobei im gekoppelten Zustand der Steckkupplung (1) der erste und zweite Ventilstößel (2.1, 3.1) stirnseitig aneinander anliegen und durch wechselseitige Krafteinwirkung von deren Dichtsitzen (2.3, 3.3) abgehoben sind, wobei der zweite Ventilstößel (3.1) einen Ventilstößelfortsatz (3.1.1) aufweist, der im gekoppelten Zustand der Steckkupplung (1) stirnseitig zur Anlage gegenüber einer Stirnseite des ersten Ventilstößels (2.1) ausgebildet ist, wobei das zweite Kupplungselement (3) eine Leckagedichtung (4) aufweist, die eine von einem randseitigen Dichtungsabschnitt (4.1) nach innen abstehende Dichtmembran (4.2) aufweist, wobei die Dichtmembran (4.2) eine Öffnung (4.3) aufweist, die derart ausgebildet ist, dass die Dichtmembran (4.2) im entkoppelten Zustand der Steckkupplung (1) zur Verhinderung von Leckagen den Ventilstößelfortsatz (3.1.1) umfangsseitig dichtend umschließt und die Dichtmembran (4.2) im gekoppelten Zustand der Steckkupplung (1) durch das erste Kupplungselement (2) derart aufgeweitet ist, dass ein Fluidfluss zwischen dem ersten und zweiten Kupplungselement (2, 3) durch die Öffnung (4.3) der Dichtmembran (4.2) hindurch ermöglicht wird.

2. Steckkupplung nach Anspruch 1, **dadurch gekennzeichnet, dass** der Querschnittsdurchmesser (d1) des Ventilstößelfortsatzes (3.1.1) kleiner ist als der Querschnittsdurchmesser (d2) des Ventilstößelabschnitts (3.1.2) des zweiten Ventilstößels (3.1), das sich unmittelbar an den Ventilstößelfortsatz (3.1.1) anschließt.

3. Steckkupplung nach Anspruch 1 oder 2, **dadurch gekennzeichnet, dass** der Querschnittsdurchmesser (d1) des Ventilstößelfortsatzes (3.1.1) kleiner ist als der Querschnittsdurchmesser (d3) des ersten Ventilstößels (2.1) im Bereich dessen Stirnfläche, die zur Anlage gegenüber der Stirnfläche des Ventilstößelfortsatzes (3.1.1) vorgesehen ist.

4. Steckkupplung nach einem der vorhergehenden Ansprüche, **dadurch gekennzeichnet, dass** der Ventilstößelfortsatz (3.1.1) einen kreisrunden Querschnitt aufweist.

5. Steckkupplung nach einem der vorhergehenden Ansprüche, **dadurch gekennzeichnet, dass** der Ventilstößelfortsatz (3.1.1) eine axiale Länge (I) aufweist, die gleich oder größer ist als die Summe der Hübe, die der erste und zweite Ventilstößel (2.1, 3.1) zwischen dem entkoppelten Zustand und dem gekoppelten Zustand der Steckkupplung (1) vollzieht.

6. Steckkupplung nach einem der vorhergehenden Ansprüche, **dadurch gekennzeichnet, dass** die Leckagedichtung (4) tellerartig ausgebildet ist und die Öffnung (4.3), durch die der Ventilstößelfortsatz (3.1.1) hindurchgeführt ist, zentriert vorgesehen ist.

7. Steckkupplung nach einem der vorhergehenden Ansprüche, **dadurch gekennzeichnet, dass** die Leckagedichtung (4) im entkoppelten Zustand der Steckkupplung (1) einen Aufnahmeraum (3.4), der umfangsseitig um den Ventilstößelfortsatz (3.1.1) herum zwischen dem Ventilstößelfortsatz (3.1.1) und einer Außenwandung (3.2.1) des zweiten Kupplungselementgehäuses (3.2) gebildet ist, fluiddicht verschließt.

8. Steckkupplung nach einem der vorhergehenden Ansprüche, **dadurch gekennzeichnet, dass** die Leckagedichtung (4) auf der Dichtmembran (4.2) mehrere umfangsseitig verteilt angeordnete Bereiche (4.4) aufweist, in denen die Wandstärke der Dichtmembran partiell erhöht ist, wobei die Bereiche (4.4) von einem randseitigen Dichtungsabschnitt (4.1) in Richtung der Öffnung (4.3) der Dichtmembran (4.2) verlaufen.

9. Steckkupplung nach einem der vorhergehenden Ansprüche, **dadurch gekennzeichnet, dass** die Bereiche (4.4) jeweils durch eine Rippe oder eine Reihe von mehreren aufeinanderfolgenden Erhebungen gebildet werden.

10. Steckkupplung nach einem der vorhergehenden Ansprüche, **dadurch gekennzeichnet, dass** die Leckagedichtung (4) im entkoppelten Zustand der Steckkupplung (1) einen ringartigen Bereich, der sich umfangsseitig um den Ventilstößelfortsatz (3.1.1) herum zwischen dem Ventilstößelfortsatz (3.1.1) und einer Außenwandung (3.2.1) des zweiten Kupplungselementgehäuses (3.2) erstreckt, überspannt.

11. Steckkupplung nach einem der vorhergehenden Ansprüche, **dadurch gekennzeichnet, dass** die Leckagedichtung (4) derart in dem zweiten Kupplungselementgehäuse (3.2) angeordnet ist, dass die Dichtmembran (4.2) der Leckagedichtung (4) im entkoppelten Zustand der Steckkupplung (1) eine Dichtfläche aufspannt, wobei der die Öffnung 4.3 bildende Rand der Dichtmembran (4.2) in axialer Richtung gesehen im Bereich des freien Endes des Ventilstößelfortsatzes (3.1.1) liegt und den Ventilstößelfortsatz (3.1.1) fluiddicht umschließt.

12. Steckkupplung nach einem der vorhergehenden Ansprüche, **dadurch gekennzeichnet, dass** die Dichtmembran (4.2) der Leckagedichtung (4) derart ausgebildet ist, dass sich diese beim Entkoppeln der Steckkupplung (1) von einer konisch aufgeweiteten Form in eine planare oder konische Form mit geringerer Konushöhe rückstellt und der die Öffnung (4.3) bildende Rand der Dichtmembran (4.2) am Ventilstößelfortsatz (3.1.1) umfangsseitig anliegt.

13. Steckkupplung nach einem der vorhergehenden Ansprüche, **dadurch gekennzeichnet, dass** der erste Ventilstößel (2.1) des ersten Kupplungselements (2) derart ausgebildet ist, dass die freiendseitig vorgesehene Stirnfläche des ersten Ventilstößels (2.1) bündig oder im Wesentlichen bündig mit dem freien Ende des ersten Kupplungselementgehäuses (2.2) abschließt, das in das zweite Kupplungselement (3) einführbar ist.

14. Steckkupplung nach einem der vorhergehenden Ansprüche, **dadurch gekennzeichnet, dass** das erste und/oder zweite Kupplungselementgehäuse (2.2, 3.2) durch ein einteiliges Spritzgussteil gebildet ist.

15. Steckkupplung nach einem der vorhergehenden Ansprüche, **dadurch gekennzeichnet, dass** das erste Kupplungselementgehäuse (2.2) zu seinem freien Ende hin zulaufend ausgebildet ist.
